# EUROPEAN PATENT SPECIFICATION

(11) **EP 2 712 163 B1**
(45) Date of publication and mention of the grant of the patent: **24.02.2016**
(21) Application number: 12786001.3
(22) Date of filing: 26.03.2012
(51) Int. Cl.: H04M 11/00

(54) **MOBILE PHONE TERMINAL, METHOD TO CONTROL START OF REMOTE OPERATION FUNCTIONS USING MOBILE PHONE TERMINAL, AND NON-TRANSIENT COMPUTER READABLE MEDIA**
MOBILTELEFON, VERFAHREN ZUR STEUERUNG DES STARTS VON FERNBEDIENUNGSFUNKTIONEN MIT DEM MOBILTELEFON UND NICHT-TRANSIENTE COMPUTERLESBARE MEDIEN
TERMINAL DE TÉLÉPHONIE MOBILE, PROCÉDÉ DE COMMANDE DE DÉMARRAGE DE FONCTIONS D'OPÉRATION À DISTANCE À L'AIDE DU TERMINAL DE TÉLÉPHONIE MOBILE, ET SUPPORTS LISIBLES PAR ORDINATEUR NON TRANSITOIRES

(30) Priority: 18.05.2011 JP 2011111013
(43) Date of publication of application: 26.03.2014
(73) Proprietor: NEC Corporation, Tokyo 108-8001 (JP)
(72) Inventor: SHIOTA, Naoki, Kawasaki-shi Kanagawa 211-8666 (JP); ICHIMURA, Shigehiro, Kawasaki-shi Kanagawa 211-8666 (JP)
(74) Representative: Vossius & Partner Patentanwälte Rechtsanwälte mbB
(86) International application number: PCT/JP2012/002060
(87) International publication number: WO 2012/157165

(56) References cited:
- EP-A1- 2 615 812
- JP-A- 9 107 585
- JP-A- 2003 169 372
- JP-A- 2008 103 828
- JP-A- 2010 109 853

## Description

### Technical Field

The present invention relates to a mobile phone device having a capability to accept an external remote operation, a control method for activating a remote operation function by a mobile phone device, and a non-transitory computer readable medium.

### Background Art

A remote operation system remotely operating a mobile phone device is known (see, e.g. JP 2009-232359 A (Patent Literature 1)). With the use of a remote operation system, settings and operations of a mobile phone device or an application program installed in the mobile phone device can be performed from a terminal which is remotely located. Accordingly, a remote operation system can be used for a "remote support" in which an operator remotely located supports a user who is not familiar with operations of a mobile phone device.

Here, the terms used in this specification are defined. The term "mobile phone device" in this specification includes a basic mobile phone device (i.e., basic phone) that supports only a telephone function or supports only telephone and SMS (Short Message service), a feature phone, a smartphone, and a tablet PC (Personal Computer) having a telephone function. Moreover, the terms "remote operation" and "remote support" in this specification include at least one of performing an input operation on a mobile phone device which is remotely located, monitoring a display screen of a mobile phone device which is remotely located, changing configuration stored in a mobile phone device which is remotely located, and transferring data to a memory of a mobile phone device which is remotely located. Further, in this specification, a terminal performing a remote operation on a mobile phone device shall be referred to as a "support terminal". Furthermore, in this specification, a remotely located operator who performs a remote support on the mobile phone device and a user of the mobile phone device shall be referred to as a "supporter".

JP 2008 103828 A relates to a remote operating method for a mobile terminal that allows only remote operation from a reliable partner and when a predetermined remote operation request is made during a video telephone with a first mobile terminal, a second mobile terminal starts transmitting a menu picture thereof to the first mobile terminal and when the first mobile terminal performs an operation based upon the menu picture and transmits operation contents thereof to the second mobile terminal, the second mobile terminal performs authentication processing using authentication information transmitted from the first mobile terminal.

EP 2 615 812 A1, claiming priority of JP 2010 202694, filed on September 10, 2010, and published in July 17, 2013, relates to a remote operation system including a user terminal and a mediation server.

### Summary of Invention

### Technical Problem

The inventors of the present application have found out the following problems in performing a remote support on a mobile phone device. It is desirable that the mobile phone device is limitedly made ready to accept a remote operation only while accepting a remote support. This is because that when the mobile phone device is always in a state ready to accept a remote operation, the mobile phone device will be at an increased risk of accepting an illegal connection. Therefore, in the case of using a remote support, the user needs to perform an operation for starting to accept a remote operation on a mobile phone device. For example, the state ready to accept a remote operation is achieved by executing an application program for remote operation. In this case, the user needs to perform a launching operation of the application program for remote operation on the mobile phone device in order to receive the remote support.

However, in the case of a remote support, a remote operation by a supporter is often performed during a telephone conversation between the user and the supporter. For this reason, while the user is on the call with the supporter using the mobile phone device, the user further needs to operate the mobile phone device for starting the remote support. However, a user who requires the remote support is expected to have low information literacy. It is difficult for such a user to intuitively understand operating the mobile phone device during a telephone call using the mobile phone device. Thus, for example, the telephone call with the supporter may be terminated by an erroneous operation.

Incidentally, WO 2008/152725 A (Patent Literature 2) discloses that a call control apparatus associates a voice call terminal with a supplementary service terminal that provides supplementary services other than voice call. The supplementary service is a service other than voice call and is, for example, a chat service transmitting and receiving text information, or a video service. In response to an initiation of a telephone call between two voice call terminals, the call control apparatus disclosed in Patent Literature 2associated with these two voice call terminals, and requests a start of the supplementary service cooperating with voice communication. However, Patent Literature 2 fails to disclose associating voice communication by the mobile phone device with a start of accepting a remote operation on the mobile phone device that is not originally cooperated with voice communication.

The present invention is made based on the above-mentioned findings by the inventors of the present application, and an object of the present invention is to provide a mobile phone device, a control method for activating a remote operation function by a mobile phone device, and a program that are capable of appropriately starting and stopping a remote operation on a mobile phone device without excessively bothering a user.

### Solution to Problem

The invention is as set out in the independent claims 1,3 and 5, preferred forms being set out in the dependent claims 2 and 4.

In a first aspect of the present invention, includes a mobile phone device includes a wireless communication unit, a telephone function unit, a remote operation function unit, and a control unit. The telephone function unit is configured to perform at least a voice telephone call via the wireless communication unit. The remote operation function unit is capable of accepting a remote operation on the mobile phone device from an external. The control unit controls the remote operation function unit to allow accepting the remote operation on the condition that a telephone call using the telephone function unit is initiated with a predetermined counterparty that is permitted for the remote operation. The control unit also controls the remote operation function unit to stop accepting the remote operation on the condition that the telephone call with the predetermined counterparty is terminated.

In a second aspect of the present invention, a control method for activating a remote operation function by a mobile phone device includes the following steps (a) and (b):
(a) allowing acceptance of a remote operation on the mobile phone device from an external on the condition that a telephone call using a telephone function unit of the mobile phone device is initiated with a predetermined counterparty that is permitted for the remote operation; and
(b) stopping the acceptance of the remote operation on the condition that the telephone call with the predetermined counterparty is terminated.

In a third aspect of the present invention, a computer program causes a computer to execute the method according to the second aspect of the present invention described above.

### Advantageous Effects of Invention

According to the above aspects of the present invention, it is possible to provide at mobile phone device, an activation control method of a remote operation function by a mobile phone device, and a program that are capable of appropriately starting and stopping a remote operation on a mobile phone device without excessively bothering a user.

### Brief Description of Drawings

Fig. 1 is a diagram showing a configuration example of a remote operation system according to a first embodiment;
Fig. 2 is a block diagram showing a configuration example of a mobile phone device according to the first embodiment;
Fig. 3 is a flowchart showing a specific example of an activation procedure of a remote operation function by the mobile phone device according to the first embodiment;
Fig. 4 is a flowchart showing a specific example of a stop procedure of the remote operation function by the mobile phone device;
Fig. 5 is a block diagram showing a configuration example of the mobile phone device according to the first embodiment;
Fig. 6 is a block diagram showing a configuration example of a mobile phone device according to a second embodiment;
Fig. 7 is a diagram showing a specific example of telephone book data;
Fig. 8 is a flowchart showing a specific example of an acceptance procedure of a remote operation by the mobile phone device according to the second embodiment; and
Fig. 9 is a diagram showing an example of data recorded on the mobile phone device by a remote operation.

### Description of Embodiments

In the following description, specific embodiments of the present invention will be described in detail with reference to the drawings. Throughout the drawings, the same or corresponding components are denoted by the same reference symbols, and overlapping description will be omitted as appropriate for the sake of clarification of description.

### <First embodiment>

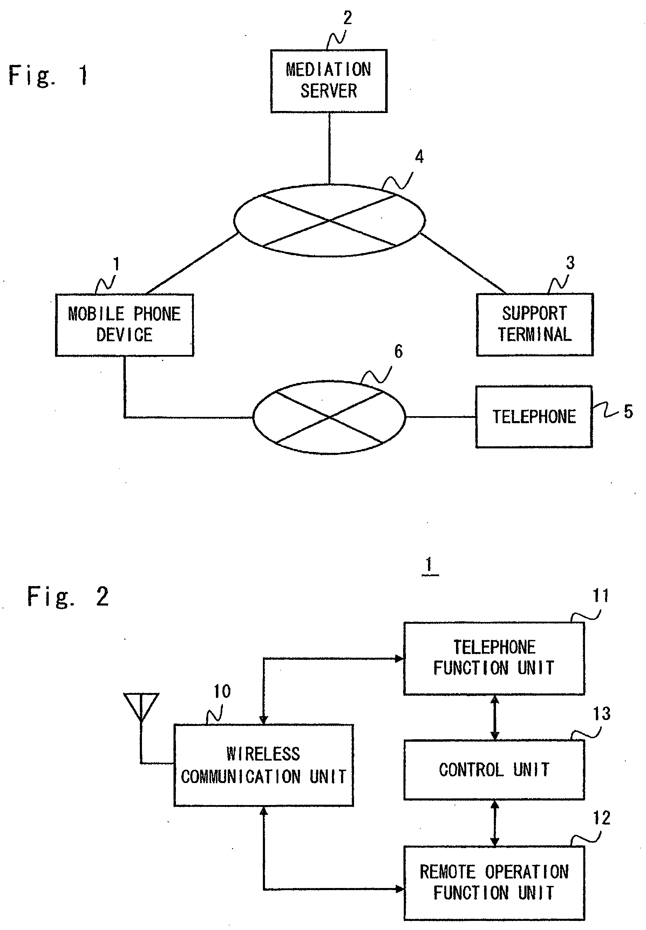

Fig. 1 shows a configuration example of a remote operation system according to this embodiment. A mobile phone device 1 has at least a telephone function and a function to accept a remote operation. The mobile phone device 1 is, for example, a basic phone, a feature phone, a smartphone, or a tablet PC having a telephone function. The mobile phone device 1 is able to perform a telephone call with a telephone terminal 5 via a network 6. A line of the telephone terminal 5 is assigned a telephone number to be capable of performing a telephone call with a supporter who uses a support terminal 3. Moreover, the mobile phone device 1 is capable of performing data communication via a network 4. The telephone function of the mobile phone device 1 may provides a voice call or a videophone call (TV phone call). The telephone function of the mobile phone device 1 may be a softphone function provided using IP telephony software. The softphone function is also referred to as an Internet telephone and a voice chat.

A mediation server 2 connects to the user terminal 1 and the support terminal 3 via the network 4, thereby mediating a remote operation on the mobile phone device 1 from the support terminal 3. The mediation server 2 may be a typical computer.

The support terminal 3 is a communication terminal such as a mobile phone device or a personal computer. The support terminal 3 includes an input device (e.g., an operation button, a touch panel, a mouse, a keyboard, a microphone, or a camera), an output device (e.g., a display, or a speaker), and a wireless or wired communication device.

The networks 4 and 6 are data transfer networks such as an IP network. The networks 4 and 6 include, for example, a radio access network and a packet core network of a mobile operator, an IP dedicated line, or a public Internet.

Note that the configuration shown in Fig. 1 is merely an example. Fig. 1 shows an example in which a remote operation on the mobile phone device 1 from the support terminal 3 is performed via the mediation server 2. Generally, addresses of the mobile phone device 1 and the support terminal 3 change as often as the mobile phone device 1 and the support terminal 3 connect to the network 4. Thus, there is no way of identifying each other's addresses directly by the mobile phone device 1 and the support terminal 3. For this reason, the mediation server 2 is used. However, after data transmission and reception is enabled directly between the mobile phone device 1 and the support terminal 3 with the help of the mediation server 2, a remote operation on the mobile phone device 1 from the support terminal 3 may be performed by P2P (Peer to Peer) communication between the mobile phone device 1 and the support terminal 3 without involving the mediation server 2. Further, when an address of at least the support terminal 3 is fixed or an address resolution service such as DNS (Domain Name System) is available, the mediation server 2 may not be used. A part or the entire of the network 4 may overlap a part or the entire of the network 6. The support terminal 3 and the telephone terminal 5 may be one integrated computer terminal.

The mobile phone device 1 according to this embodiment allows accepting a remote operation from the support terminal 3 on the condition that a telephone call has been initiated with a predetermined counterparty that is permitted for a remote operation. The mobile phone device 1 stops accepting the remote operation from the support terminal 3 on the condition that the telephone call with the predetermined counterparty has been terminated. A configuration and an operation of the mobile phone device 1 are explained in detail below.

Fig. 2 is a block diagram showing a configuration example of the mobile phone device 1. Fig. 2 shows only main elements according to this embodiment. A wireless communication unit 10 connects to a wireless network and performs wireless communication. The wireless network is, for example, a wireless access network of a cellular communication system such as W-CDMA (Wideband Code Division Multiple Access), LTE (Long Term Evolution), or mobile WiMaX, or a wireless LAN (Local Area Network). The wireless communication unit 10 generates a transmission signal by performing operations including transmission path encoding on transmission data, interleaving, modulation (transmission symbol mapping), frequency up conversion, and signal amplification. Moreover, the wireless communication unit 10 performs, on a reception signal received by an antenna, operations including signal amplification, frequency down conversion, demodulation, and error correction decoding, thereby generating reception data.

A telephone function unit 11 has a voice codec function that performs compression of an analog voice signal and decompression of encoded voice data. The telephone function unit 11 is connected to a speaker (not shown) and a microphone (not shown). The telephone function unit 11 accepts an operation by a user (e.g., accepts an operation to specify a telephone number of a call counterparty) and performs communication protocol processing for initiating a voice call.

A remote operational function unit 12 accepts a remote operation on the mobile phone device 1 from the support terminal 3. The remote operation on the mobile phone device 1 performed by the support terminal 3 includes at least one of performing an input operation on the mobile phone device 1, monitoring a display screen of the mobile phone device 1, changing configuration stored in the mobile phone device, and transferring data to a memory of the mobile phone device 1 . The remote operation function unit 12 receives data including a remote operation request transmitted from the support terminal 3 or the mediation server 2 via the wireless communication unit 10. Then, in response to the request from the support terminal 3 or the mediation server 2, the remote operation function unit 12 performs, for example, data collection, configuration change processing on the terminal 1, and data transmission to the support terminal 3 or the mediation server 2.

The control unit 13 controls the remote operation function unit 12 to start and stop accepting a remote operation. Specifically, the control unit 13 allows accepting a remote operation from the support terminal 3 on the condition that a telephone call using the telephone function unit 11 has been initiated with the predetermined counterparty. Moreover, the control unit 13 stops accepting the remote operation on the condition that the telephone call with the predetermined counterparty has been terminated. The predetermined counterparty is, typically, a supporter. However, the predetermined counterparty may be a counterparty other than the supporter. The mobile phone device 1 may stores information necessary for initiating a telephone call such as a telephone number, a user name, or an e-mail address of the predetermined counterparty in association with permission information indicating that it is the predetermined counterparty.

In order to start accepting a remote operation at the remote operation function unit 12, the control unit 13 may send a start request to the remote operation function unit 12. The remote operation function unit 12 may start accepting the remote operation in response to the start request. Accepting a remote operation may be performed by, for example, opening a communication port (e.g., TCP (Transmission Control Protocol) port) for reception. On the other hand, in order to stop accepting the remote operation at the remote operation function unit 12, the control unit 13 may send a stop request to the remote operation function unit 12. The remote operation function unit 12 may stop accepting the remote operation by closing the communication port in response to the stop request.

As stated above, the mobile phone device 1 according to this embodiment automatically switches allowing and stopping the acceptance of a remote operation according to whether or not a telephone call is performed with the predetermined counterparty. In other words, the mobile phone device 1 according to this embodiment allows accepting a remote operation from the support terminal 3 on the condition that a telephone call has been initiated with the predetermined counterparty that is permitted for a remote operation, and stops accepting the remote operation from the support terminal 3 on the condition that the telephone call with the predetermined counterparty has been terminated. Hence, the mobile phone device 1 can limitedly and automatically accept a remote operation when it is necessary to start the remote operation, i.e., when a telephone call is performed with the predetermined counterparty (typically, a supporter). Therefore, the mobile phone device 1 can appropriately start and stop a remote operation of the terminal 1 without excessively troubling a user.

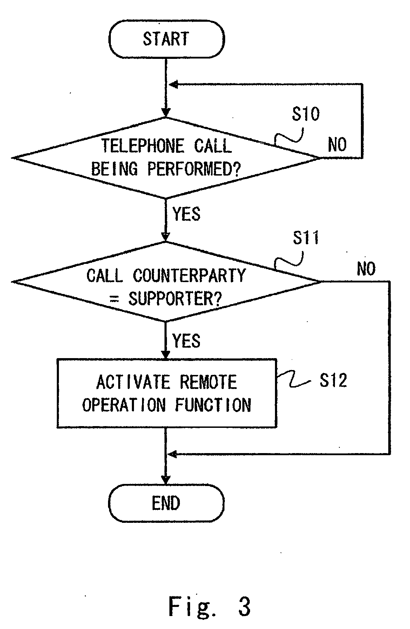

A specific example of a start procedure and a stop procedure for accepting a remote operation by the control unit 13 is explained below. Fig. 3 is a flowchart showing the specific example of a procedure for starting acceptance of a remote operation. In Step S10, the control unit 13 determines whether or not a telephone call is being performed by the telephone function unit 11. Specifically, the control unit 13 may detect an initiation of a telephone call based on an outgoing call from the telephone function unit 11 or an incoming call to the telephone function unit 11. When a telephone call is being performed (YES in Step S10); the control unit 13 determines whether a call counterparty is the predetermined counterparty (supporter in the example of Fig. 3) (Step S11). When the call counterparty is the predetermined counterparty (YES in Step S1l) the control unit 13 activates a remote operation function by the remote operation function unit 12, thereby allowing acceptance of a remote operation from the support terminal 3 or the mediation server 2.

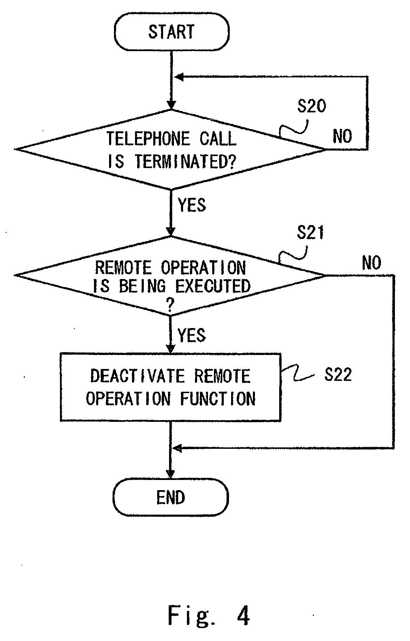

Fig. 4 is a flowchart showing the specific example of a procedure for stopping acceptance of a remote operation. In Step S20, the control unit 13 determines whether or not a telephone call by the telephone function unit 11 is terminated. Specifically, the control unit 13 may detect call termination processing of the telephone function unit 11 by a user operation or call termination processing of the telephone function unit 11 by a communication disconnection caused by a call counterparty. When a telephone call has been terminated (YES in Step S20), the control unit 13 determines whether or not a remote operation is being executed, i.e., whether or not the remote operation function of the remote operation function unit 12 is being activated (Step S21). When the remote operation function is being activated (YES in Step S21), the control unit 13 deactivates the remote operation function of the remote operation function unit 12 thereby stopping acceptance of a remote operation from the support terminal 3 or the mediation server 2.

The processing of allowing and stopping the acceptance of a remote operation by the control unit 13, which is explained in this embodiment, may be implemented using a semiconductor processing apparatus including ASIC (Application Specific Integrated Circuit). Alternatively, such processing may be implemented by causing a computer, such as a microprocessor or DSP (Digital Signal Processor), to execute a program. Specifically, one or a plurality of programs including instructions for causing a computer to execute algorithms shown in Figs. 3 and 4 may be prepare and supplied to the computer.

This program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM (compact disc read only memory), CD-R (compact disc recordable), CD-R/W (compact disc rewritable), and semiconductor memories (such as mask ROM, PROM (programmable ROM), EPROM (erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

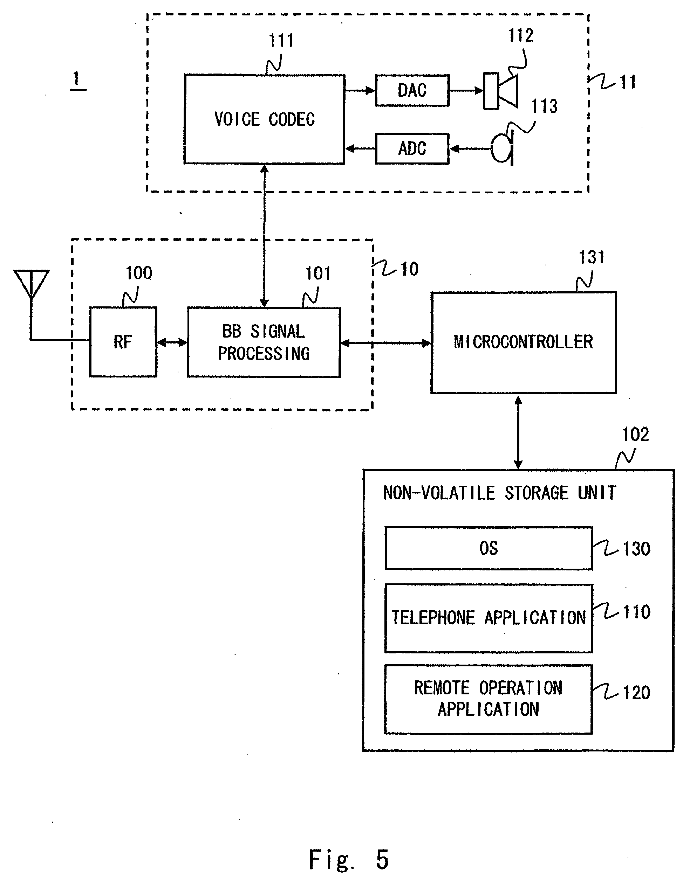

Fig. 5 shows a more detailed configuration example of the mobile phone device 1. The wireless communication unit 10 shown in Fig. 5 includes an RF (Radio Frequency) unit 100 and a baseband signal processing unit 101. The RF unit 100 performs analog signal processing (amplification and frequency conversion) on an analog transmission signal transmitted from the antenna and an analog reception signal received by the antenna. The baseband signal processing unit 101 performs, on transmission data received from a voice codec unit 111 or a microcontroller 131 that are described later, signal processing including channel coding, interleaving, and modulation, and outputs a resultant transmission baseband signal to the RF unit 100. Moreover, the baseband signal processing unit 101 performs, on the reception baseband signal received from the RF unit 100, signal processing including demodulation, deinterleaving, and error correction decoding, and outputs a resultant reception data to the audio codec unit 111 or the microcontroller 131.

The telephone function unit 11 shown in Fig. 5 includes the voice codec unit 111, a speaker 112, and a microphone 113. The voice codec unit 111 receives an encoded digital voice signal from the baseband signal processing unit 101, and decompresses the encoded digital voice signal. The digital voice signal obtained by the decompression processing is converted into an analog signal by a DA converter (DAC) and supplied to the speaker 112. Further, the voice codec unit 111 receives a voice signal collected by the microphone 113 via an AD converter (ADC) and performs compression on a digital voice signal.

The microcontroller 131 is a microprocessor, and executes an OS (Operating System) 130, a telephone application program 110, and a remote operation application program 120 that are stored in a non-volatile storage unit 102. The non-volatile storage unit 102 is, for example, a flash memory, a hard disk drive, or a combination thereof. The microcontroller 131 performs (a) Protocol processing regarding the wireless communication unit 10, (b) protocol processing regarding the telephone function unit 11, (c) interaction processing with the user regarding the telephone function unit 11, (d) processing to accept a remote operation regarding the remote operation function unit 12, and (e) control processing to start and stop the acceptance of a remote operation regarding the control unit 13.

For example, the microcontroller 131, which executes the telephone application program 110, displays a user interface screen on a display (not shown) included in the terminal 1. The user inputs a telephone number using the displayed user interface screen and makes a telephone call or receives an incoming call and initiates a telephone conversation.

In addition, the microcontroller 131, which executes the remote operation application program 120, receives a request from the support terminal 3 or the mediation server 2, and executes an operation according to the request. For example, the microcontroller 131, which executes the remote operation application program 120, may provide a WEB server function and accept an HTTP (Hypertext Transfer Protocol) request from the support terminal 3 or the mediation server 2. The controller 131 may execute processing regarding a remote operation such as configuration change of the terminal 1 in accordance with parameters contained in the HTTP request from the server terminal 3 or the mediation server 2.

### <Second embodiment>

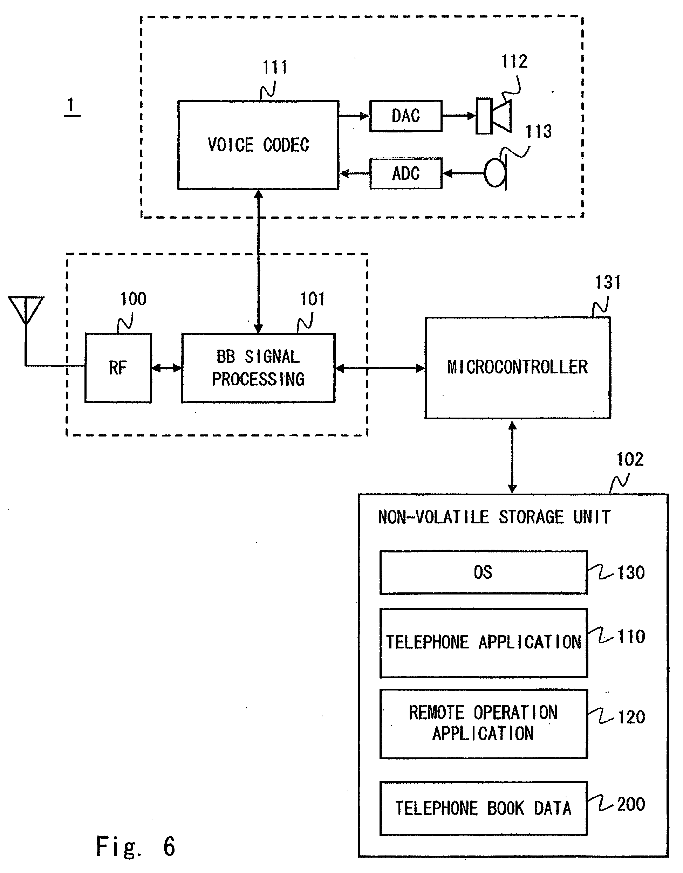

This embodiment explains a modified example of the remote operation system according to the first embodiment. Fig. 6 is a block diagram showing a configuration example of the mobile phone device 1 according to this embodiment. The mobile phone device 1 according to this embodiment holds telephone book data 200 that associates permission information indicating whether or not a remote operation is permitted with a telephone number. The microcontroller 131, which functions as the control unit 13, accesses the telephone book data 200 in response to an outgoing call or an incoming call. Then, when a telephone number of a call counterparty by the telephone function unit 11 is recorded on the telephone book data 200 in association with the permission information indicating that a remote operation is permitted, the microcontroller 131 starts accepting a remote operation. Starting the acceptance of a remote operation may be performed by, for example, launching the remote operation application program 120 and bring the program to a ready state for execution. Alternatively, starting the acceptance of a remote operation may be performed by opening a communication port for the remote operation application program 120 which is already in a ready state for execution.

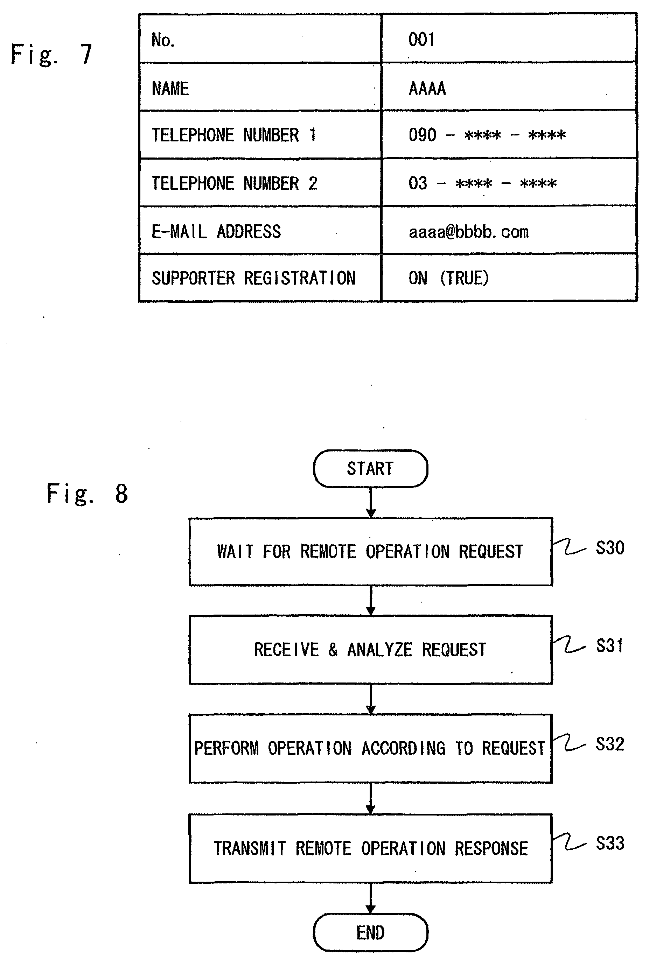

Fig. 7 is a diagram showing a specific example of an entry included in the telephone book data 200. In the example of Fig. 7, a name, a telephone number, an e-mail address, and supporter registration information are associated and recorded. The supporter registration information shown in Fig. 7 corresponds to the "permission information" indicating whether or not a remote operation by a counterparty corresponding to this entry is permitted. In the example shown in Fig. 7, a remote operation is permitted or prohibited by a truth value (logical value) indicating TRUE or FALSE.

Fig. 8 is a flowchart showing a specific example of a procedure for processing a remote operation request by the mobile phone device 1. In Step S30, the microcontroller 131, which functions as the remote operation function unit 12, waits for a remote operation request (e.g., an HTTP request). In Step 531, the microcontroller 131 analyzes contents of the arrived remote operation request. In Step S32, the microcontroller 131 performs a requested operation according to an analysis result of the remote operation request. For example, in the case of the request for updating configuration data, the telephone book data, or the like, the microcontroller 131 rewrites data held by the mobile phone device 1.

In Step S33, the microcontroller 131 transmits a response (e.g., an HTTP response) to the remote operation request to the support terminal 3 or the mediation server 2 via the wireless communication unit 10. The response to the remote operation request indicates a processing result for the remote operation request. When the processing according to the request is successfully completed, the microcontroller 131 may transmit a response indicating normal processing (e.g., an HTTP response including a header indicating a success). On the other hand, when there is an abnormality in the processing according to the request, the microcontroller 131 may transmit a response including an error message.

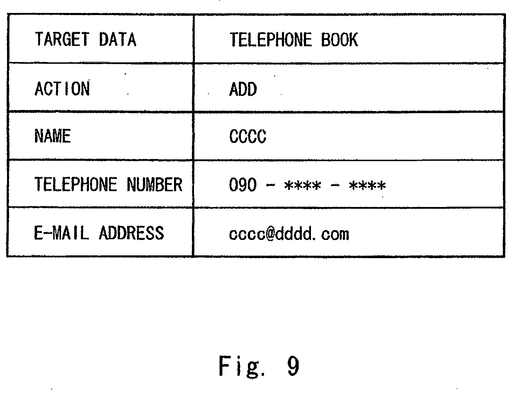

As an example of information included in a remote operation request, Fig. 9 shows information included in a remote operation request for requesting an addition of an entry to the telephone book. The example of Fig. 9 is an addition request of one entry including a name, a telephone number, and an e-mail address. When this remote operation request is made by an HTTP request, the support terminal 3 or the mediation server 2 may transmit a HTTP request containing a text message as shown below.
POST/contacts/add
name=CCCC
tel=090********
email=cccc@dddd.com

According to this embodiment, it is possible to automatically start or stop accepting a remote operation in association with a telephone call between a user and a supporter by specifying the supporter in the telephone book data in advance. Therefore, the user is able to accept a remote support only by making a telephone call to the supporter without any other special operations.

In a similar manner as stated in the first embodiment, the control of starting and stopping the acceptance of a remote operation by the mobile phone device 1, which is described in this embodiment, may be implemented by causing a computer to execute a program.

Further, the present invention is not limited to the above embodiments, but various modifications obvious to one skilled in the art within the scope of the present invention can be made without departing from the scope of the present invention already stated above.

The present application is based upon and claims the benefit of priority from Japanese Patent Application No. 2011-111013 filed on 18 May 2011.

### Reference Signs List

- 1: MOBILE PHONE DEVICE
- 2: MEDIATION SERVER
- 3: SUPPORT TERMINAL
- 4: NETWORK
- 5: TELEPHONE EQUIPMENT
- 6: NETWORK
- 10: WIRELESS COMMUNICATION UNIT
- 11: TELEPHONE FUNCTION UNIT
- 12: REMOTE OPERATION FUNCTION UNIT
- 13: CONTROL UNIT
- 100: RF UNIT
- 101: BASEBAND SIGNAL PROCESSING UNIT
- 102: NON-VOLATILE STORAGE UNIT
- 110: TELEPHONE APPLICATION
- 111: VOICE CODEC UNIT
- 112: SPEAKER
- 113: MICROPHONE
- 120: REMOTE OPERATION APPLICATION
- 130: OPERATING SYSTEMS
- 131: MICROCONTROLLER
- 200: TELEPHONE BOOK DATA

## Claims

1. A mobile phone device (1) comprising:
wireless communication means (10);
telephone function means (11) for performing at least a voice telephone call via the wireless communication means (10);
remote operation function means (12) for accepting a remote operation on the mobile phone device (1) from an external; and
control means (13) for controlling the remote operation function means (12) to allow accepting the remote operation on the condition that a telephone call using the telephone function means (11) is initiated with a predetermined counterparty that is permitted for the remote operation on the mobile phone device (1), and also controlling the remote operation function means (12) to stop accepting the remote operation on the condition that the telephone call with the predetermined counterparty is terminated; and
telephone book data storage means (102, 200) for storing permission information indicating whether or not the remote operation on the mobile phone device (1) is permitted in as sociation with the telephone number, and
the control means (13) refers to a telephone number of the call counterparty of the telephone function means (11) in response to an outgoing call or an incoming call, and when the telephone number of the call counterparty of the telephone function means (11) is recorded on the telephone book data storage means (102, 200) in association with the permission information indicating that the remote operation on the mobile phone device (1) is permitted, the control means (13) is configured to determine that the call counterparty of the telephone function means (11) is the predetermined counterparty.

2. The mobile phone device (1) according to Claim 1, wherein the control means (13) is configured to allow accepting the remote operation by launching a computer program for accepting the remote operation and bringing the computer program to a ready state for execution, and configured to stop accepting the remote operation by bringing the computer program to a dormant state in which a processor resource is not allocated to the computer program.

3. A control method for activating a remote operation function by a mobile phone device (1) comprising the steps of:
allowing acceptance of a remote operation on the mobile phone device (1) from an external on the condition that a telephone call using telephone function means (11) of the mobile phone device (1) is initiated with a predetermined counterparty that is permitted for the remote operation on the mobile phone device (1);
stopping the acceptance of the remote operation on the condition that the telephone call with the predetermined counterparty is terminated; and
referring to a telephone number of the call counterparty of the telephone function means (11) in response to an outgoing call or an incoming call, and when the telephone number of the call counterparty of the telephone function means (11) is recorded as telephone book data arranged in the mobile phone device (1) in association with permission information indicating that the remote operation on the mobile phone device (1) is permitted, determining that the call counterparty of the telephone function means (11) is the predetermined counterparty.

4. The method according to Claim 3, wherein
said allowing includes the step of launching a computer program for accepting the remote operation and bringing the computer program to a ready state for execution, and
said stopping includes the step of bringing the computer program to a dormant state in which a processor resource is not allocated to the computer program.

5. A non-transitory computer readable medium storing a program for causing a computer to execute the method according to any one of Claims 3 to 4.

## Patentansprüche

1. Mobiltelefonvorrichtung (1), die aufweist:
eine drahtlose Kommunikationseinrichtung (10);
eine Telefonfunktionseinrichtung (11) zum Durchführen mindestens eines Sprachtelefonanrufs über die drahtlose Kommunikationseinrichtung (10);
eine Fernbedienungs-Funktionseinrichtung (12) zum Akzeptieren einer Fernbedienung an der Mobiltelefonvorrichtung (1) von außen; und
eine Steuereinrichtung (13) zum Steuern der Fernbedienungs-Funktionseinrichtung (12), um das Akzeptieren der Fernbedienung unter der Bedingung zu ermöglichen, dass ein Telefonanruf mit Hilfe der Telefonfunktionseinrichtung (11) mit einer vorbestimmten Gegenpartei eingeleitet wird, die für die Fernbedienung an der Mobiltelefonvorrichtung (1) zugelassen ist, und ferner zum Steuern der Fernbedienungs-Funktionseinrichtung (12), um das Akzeptieren der Fernbedienung unter der Bedingung zu stoppen, dass der Telefonanruf mit der vorbestimmten Gegenpartei beendet ist; und
eine Telefonbuchdaten-Speichereinrichtung (102, 200) zum Speichern von Zulassungsinformationen als Angabe, ob die Fernbedienung an der Mobiltelefonvorrichtung (1) zugelassen ist, in Zuordnung zur Telefonnummer und
wobei die Steuereinrichtung (13) auf eine Telefonnummer der Anrufgegenpartei der Telefonfunktionseinrichtung (11) als Reaktion auf einen abgehenden Ruf oder einen ankommenden Ruf Bezug nimmt und bei Registrierung der Telefonnummer der Anrufgegenpartei der Telefonfunktionseinrichtung (11) in der Telefonbuchdaten-Speichereinrichtung (102, 200) in Zuordnung zu den Zulassungsinformationen als Angabe, dass die Fernbedienung an der Mobiltelefonvorrichtung (1) zugelassen ist, die Steuereinrichtung (13) so konfiguriert ist, dass sie bestimmt, dass die Anrufgegenpartei der Telefonfunktionseinrichtung (11) die vorbestimmte Gegenpartei ist.

2. Mobiltelefonvorrichtung (1) nach Anspruch 1, wobei die Steuereinrichtung (13) so konfiguriert ist, dass sie das Akzeptieren der Fernbedienung ermöglicht, indem sie ein Computerprogramm zum Akzeptieren der Fernbedienung startet und das Computerprogramm in einen Bereitschaftszustand zur Abarbeitung überführt, und so konfiguriert ist, dass sie das Akzeptieren der Fernbedienung stoppt, indem sie das Computerprogramm in einen Ruhezustand überführt, in dem keine Prozessorressource dem Computerprogramm zugewiesen ist.

3. Steuerverfahren zum Aktivieren einer Fernbedienungsfunktion durch eine Mobiltelefonvorrichtung (1), das die Schritte aufweist:
Ermöglichen der Akzeptanz einer Fernbedienung an der Mobiltelefonvorrichtung (1) von außen unter der Bedingung, dass ein Telefonanruf mit Hilfe der Telefonfunktionseinrichtung (11) der Mobiltelefonvorrichtung (1) mit einer vorbestimmten Gegenpartei eingeleitet wird, die für die Fernbedienung an der Mobiltelefonvorrichtung (1) zugelassen ist;
Stoppen der Akzeptanz der Fernbedienung unter der Bedingung, dass der Telefonanruf mit der vorbestimmten Gegenpartei beendet ist; und
Bezugnehmen auf eine Telefonnummer der Anrufgegenpartei der Telefonfunktionseinrichtung (11) als Reaktion auf einen abgehenden Ruf oder einen ankommenden Ruf und bei Registrierung der Telefonnummer der Anrufgegenpartei der Telefonfunktionseinrichtung (11) als in der Mobiltelefonvorrichtung (1) angeordnete Telefonbuchdaten in Zuordnung zu Zulassungsinformationen als Angabe, dass die Fernbedienung an der Mobiltelefonvorrichtung (1) zugelassen ist, erfolgendes Bestimmen, dass die Anrufgegenpartei der Telefonfunktionseinrichtung (11) die vorbestimmte Gegenpartei ist.

4. Verfahren nach Anspruch 3, wobei
das Ermöglichen den Schritt aufweist: Starten eines Computerprogramms zum Akzeptieren der Fernbedienung und Überführen des Computerprogramms in einen Bereitschaftszustand zur Abarbeitung, und
das Stoppen den Schritt aufweist: Überführen des Computerprogramms in einen Ruhezustand, in dem keine Prozessorressource dem Computerprogramm zugewiesen ist.

5. Nicht transitorisches computerlesbares Medium, das ein Programm zum Veranlassen eines Computers speichert, das Verfahren nach einem der Ansprüche 3 bis 4 abzuarbeiten.

## Revendications

1. Dispositif de téléphonie mobile (1) comprenant :
des moyens de communication sans fil (10) ; des moyens formant fonctions de téléphonie (11) pour réaliser au moins un appel téléphonique vocal par l'intermédiaire des moyens de communication sans fil (10) ; des moyens formant fonctions d'exploitation à distance (12) pour accepter une exploitation à distance sur le dispositif de téléphonie mobile (1) depuis l'extérieur ; et des moyens de commande (13) pour commander les moyens formant fonctions d'exploitation à distance (12) afin de permettre d'accepter l'exploitation à distance à la condition qu'un appel téléphonique utilisant les moyens formant fonctions de téléphonie (11) soit amorcé avec une contrepartie prédéterminée qui est autorisée pour l'exploitation à distance sur le dispositif de téléphonie mobile (1), et commander également les moyens formant fonctions d'exploitation à distance (12) pour cesser d'accepter l'exploitation à distance à la condition que l'appel téléphonique avec la contrepartie prédéterminée soit terminé ; et
des moyens d'enregistrement de données de répertoire téléphonique (102, 200) pour enregistrer les informations d'autorisation indiquant si l'exploitation à distance sur le dispositif de téléphonie mobile (1) est autorisée ou non en association avec le numéro de téléphone, et les moyens de commande (13) se rapportent à un numéro de téléphone de la contrepartie d'appel des moyens formant fonctions de téléphonie (11) en réponse à un appel sortant ou un appel entrant, et lorsque le numéro de téléphone de la contrepartie d'appel des moyens formant fonctions de téléphonie (11) est enregistré sur les moyens d'enregistrement de données de répertoire téléphonique (102, 200) en association avec les informations d'autorisation indiquant que l'exploitation à distance sur le dispositif de téléphonie mobile (1) est autorisée, les moyens de commande (13) sont configurés pour déterminer que la contrepartie d'appel des moyens formant fonctions de téléphonie (11) est la contrepartie prédéterminée.

2. Dispositif de téléphone mobile (1) selon la revendication 1, dans lequel les moyens de commande (13) sont configurés pour permettre d'accepter l'exploitation à distance en lançant un programme informatique pour accepter l'exploitation à distance et amener le programme informatique à un état prêt à l'exécution, et configuré pour cesser d'accepter l'exploitation à distance en amenant le programme informatique à un état inactif dans lequel une ressource processeur n'est pas attribuée au programme informatique.

3. Procédé de commande pour activer une fonction d'exploitation à distance par un dispositif de téléphonie mobile (1) comprenant les étapes :
autorisation de l'acceptation de l'exploitation à distance sur le dispositif de téléphonie mobile (1) depuis l'extérieur à la condition qu'un appel téléphonique utilisant des moyens formant fonctions de téléphonie (11) du dispositif de téléphonie mobile (1) soit amorcé avec une contrepartie prédéterminée qui est autorisée pour l'exploitation à distance sur le dispositif de téléphonie mobile (1) ; l'arrêt de l'acceptation de l'exploitation à distance à la condition que l'appel téléphonique avec la contrepartie prédéterminée soit terminé ; et la référence à un numéro de téléphone de la contrepartie d'appel des moyens formant fonctions de téléphonie (11) en réponse à un appel sortant ou un appel entrant, et lorsque le numéro de téléphone de la contrepartie d'appel des moyens formant fonctions de téléphonie (11) est enregistré comme données de répertoire téléphonique agencées dans le dispositif de téléphonie mobile (1) en association avec des informations d'autorisation indiquant que l'exploitation à distance sur le dispositif de téléphonie mobile (1) est autorisée, la détermination que la contrepartie d'appel des moyens formant fonctions de téléphonie (11) est la contrepartie prédéterminée.

4. Procédé selon la revendication 3, dans lequel ladite autorisation comprend l'étape de lancement d'un programme informatique pour accepter l'exploitation à distance et de mise du programme informatique dans un état prêt pour l'exécution, et ledit arrêt comprend l'étape consistant à amener le programme informatique à un état inactif dans lequel une ressource processeur n'est pas attribuée au programme informatique.

5. Support non transitoire lisible par ordinateur enregistrant un programme pour entraîner un ordinateur à exécuter le procédé selon l'une quelconque des revendications 3 à 4.
